# EUROPEAN PATENT SPECIFICATION

(11) **EP 1 820 570 B1**
(45) Date of publication and mention of the grant of the patent: **24.12.2008**
(21) Application number: 07000922.0
(22) Date of filing: 17.01.2007
(51) Int. Cl.: B01J 23/00, B01J 23/10, B01J 23/34, B01D 53/94, F01N 3/035

(54) **Use of a composite metal oxide as oxidation catalyst for cleaning exhaust gas**
Verwendung eines Metalloxides als Oxidationskatalysator zum Reinigen von Abgas
Utilisation d'un oxide composite comme catalyseur d'oxydation pour le nettoyage des gaz d'échappement

(30) Priority: 14.02.2006 JP 2006036796
(43) Date of publication of application: 22.08.2007
(73) Proprietor: Honda Motor Co., Ltd., Tokyo 107-8556 (JP)
(72) Inventor: Isogai, Yuji, Wako-shi Saitama 351-0193 (JP); Tanaami, Kiyoshi, Wako-shi Saitama 351-0193 (JP); Onodera, Minako, Wako-shi Saitama 351-0193 (JP); Naka, Takahiro, Wako-shi Saitama 351-0193 (JP)
(74) Representative: Dey, Michael

(56) References cited:
- US-A- 4 126 580
- US-A1- 2005 049 143
- XU H W ET AL: "Structure, magnetic susceptibility and heat capacity of ScMnO3" 15 April 1995 (1995-04-15), JOURNAL OF ALLOYS AND COMPOUNDS, ELSEVIER SEQUOIA, LAUSANNE, CH, PAGE(S) 274-279 , XP004248950 ISSN: 0925-8388 * paragraph [1.INTRODUCTION] *
- ASOKAN K ET AL: "Comparison of electronic structures of orthorhombic and hexagonal manganites studied by X-ray absorption spectroscopy" June 2005 (2005-06), SOLID STATE COMMUNICATIONS, OXFORD, GB, PAGE(S) 821-826 , XP004900258 ISSN: 0038-1098 * paragraph [1.INTRODUCTION]; figure 1 *

## Description

### BACKGROUND OF THE INVENTION

### Field of the Invention

The present invention relates to the use of a composite oxide for cleaning exhaust gas, which oxidizes particulates, polycyclic aromatic hydrocarbons and the like contained in the exhaust gas discharged from internal-combustion engines to clean the exhaust gas.

### Description of the Related Art

In order to clean the exhaust gas discharged from internal-combustion engines such as a motorcar engine, an oxidation catalyst for cleaning exhaust gas in which a noble metal as a catalyst is supported on a heat-resistant carrier such as alumina, and ceria or the like is further mixed to promote oxidation reaction has been conventionally used. The conventional oxidation catalyst for cleaning exhaust gas can oxidize volatile organic compounds (VOCs) having low boiling points contained in the above exhaust gas, but cannot achieve sufficient function for oxidizing the particulates and polycyclic aromatic hydrocarbons.

This is due to that the particulates and polycyclic aromatic hydrocarbons have high boiling points and are chemically more stable than the VOCs. In order to oxidize particulates, polycyclic aromatic hydrocarbons, and the like contained in the exhaust gas, it is therefore conceivable to use a composite oxide containing two kinds of metal elements as an oxidation catalyst capable of giving an atmosphere of stronger oxidation reaction.

As the composite oxide, there is known, for example, a compound having a perovskite structure, represented by the chemical formula of AB₁₋ₓCₓO₃ wherein A is at least one of lanthanum, strontium, cerium, barium, and calcium; B is at least one of cobalt, iron, nickel, chromium, manganese, and magnesium; and C is at least one of platinum and palladium (see, for example, Japanese PatentLaid-Open No.2003-334443). The compound having a perovskite structure is considered capable of decreasing the combustion starting temperature of particulates because the platinum or palladium is activated.

As the composite oxide, there is also known, for example, a cerium-zirconium composite oxide (see Japanese Patent Laid-Open No. 7-116519). The cerium-zirconium composite oxide has an oxygen storage capacity, and is considered to release the oxygen when the cerium atom produces a valence change from tetravalency to trivalency in a reducing atmosphere.

However, the conventional composite oxides are not sufficient in the function of oxidizing particulates, polycyclic aromatic hydrocarbons, and the like contained in the above-described exhaust gas, and desired to be further improved.

Xu et al. (Journal of Alloys and Compounds, ELSEVIER Sequoia, Lausanne, pp. 274-279, April 1995), describes the structure, magnetic susceptibility and heat capacity of ScMnO₃.

Asokan et al. (Solid State Communications, Oxford, GB, pp. 821-826, June 2005) discloses a comparison of electronic structures of orthorhombic and hexagonal manganites studied by X-ray absorption spectroscopy.

### SUMMARY OF THE INVENTION

In view of such circumstances, an object of the present invention is to provide an oxidation catalyst for the use in cleaning exhaust gas, wherein the oxidation catalyst is excellent in the function of oxidizing high boiling point materials such as particulates and polycyclic aromatic hydrocarbons contained in the exhaust gas of internal-combustion engines.

In order to achieve the above object, the oxidation catalyst for use in cleaning exhaust gas according to the invention comprises a composite oxide which contains two kinds of metal elements and, when the two kinds of metal elements are defined as A and B, is represented by the general formula of ABO₃, wherein the value of (the ionic radius of metal element A) / (the ionic radius of metal element B) is in the range of from 1.349 to 1.580.

The value of ionic radius adopts Shannon's ionic radius; it is the value of an octa-coordinated trivalent ionic radius for the metal element A or the value of a hexa-coordinated trivalent ionic radius for the metal element B.

The oxidation catalyst for use in cleaning exhaust gas according to the invention can have a value of the ionic radius ratio between the two kinds of metal elements A and B (the ionic radius of metal element A)/(the ionic radius of metal element B) falling within the above-described range to make the composite oxide into a hexagonal structure to give an oxygen storage capacity more excellent than that of a composite oxide having a perovskite structure or a cerium-zirconium composite oxide. Thus, the oxidation catalyst for use in cleaning exhaust according to the invention can generate an extremely strong oxidation atmosphere in oxidizing high boiling point materials such as particulates and polycyclic aromatic hydrocarbons contained in the exhaust gas of internal-combustion engines, and enables the oxidation to be conducted at a temperature lower than before.

A value of the ionic radius ratio of more than 1.580 makes the structure of the composite oxide into a perovskite structure, and cannot give a sufficient oxygen storage capacity. A value of the ionic radius ratio of less than 1.349 does not enable the composite oxide to have a hexagonal structure, and cannot again give a sufficient oxygen storage capacity.

Because the oxidation catalyst for use in cleaning exhaust gas according to the invention has a value of the ionic radius ratio falling within the above-describedrange, it is preferred that the metal element A is one kind of metal element selected from the group consisting of Sc, Y, Ho, Er, Tm, Yb, and Lu, and the metal element B is Mn.

As composite oxides having a hexagonal structure, there are known, for example, LiNiO₂ and LiCoO₂ (see Japanese Patent Laid-Open No. 10-003921).

### BRIEF DESCRIPTION OF THE DRAWINGS

FIG. 1 is a set of X-ray diffraction patterns showing the structures of composite oxides forming oxidation catalysts for use in cleaning exhaust gas according to the present invention; and
FIG. 2 is a bar graph showing the relationship between the value of the ionic radius ratio of each composite oxide and the combustion peak temperature of carbon black in each oxidation catalyst for use in cleaning exhaust gas according to the present invention.

### DETAILED DESCRIPTION OF THE PREFERRED EMBODIMENTS

An embodiment of the present invention will be now described in further detail with reference to the accompanying drawings.

The oxidation catalyst for use in cleaning exhaust gas according to the present embodiment is a composite oxide which contains two kinds of metal elements A and B and is represented by the general formula of ABO₃ wherein the value of the ionic radius ratio between the two kinds of metal elements A and B (the ionic radius of metal element A)/(the ionic radius of metal element B) is in the range of from 1.349 to 1.580. Combinations of the metal elements A and B each allowing the ionic radius ratio to fall within the above-described range include, for example, a case where the metal element A is one kind of metal element selected from the group consisting of Sc, Y, Ho, Er, Tm, Yb, and Lu, and the metal element B is Mn.

The composite oxide has a hexagonal structure, which is a unique structure where the metal element B having a small ionic radius is surrounded by a total of 5 oxygen atoms: 3 oxygen atoms lying in the same plane as the atom of the metal element B and 2 apical oxygen atoms.

The composite oxide can be produced, for example, as follows.

First, an acetate, nitrate, or oxide of the metal element A, an acetate or nitrate of the metal element B, and urea are grind mixed in a molar ratio of 1:1:1 to 20, for example, in a molar ratio of 1:1:6. The grind mixing may be carried out, if necessary, using a ball mill or the like.

Next, the resultant mixture is allowed to react at a temperature of 100 to 250°C for 30 to 300 minutes, then at 270 to 330°C for 30 to 300 minutes, and further at 350 to 500°C for 30 to 300 minutes. The reaction may be conducted, for example, by subjecting to treatment at 250°C for 30 minutes, then at 300°C for 30 minutes, and further at 350°C for one hour.

Then, the resultant reaction mixture can be grind mixed, followed by calcining at a temperature of 600 to 1, 200°C for 1 to 5 hours to provide a desired composite oxide. The grind mixing may be carried out, if necessary, using a ball mill or the like. The calcining may be carried out, for example, by treatment at a temperature of 800°C for one hour.

The composite oxide may be used alone per se as an oxidation catalyst for use in cleaning exhaust gas, or may be also used by adding it to a different oxidation catalyst as a co-catalyst for promoting the oxidation property of the different oxidation catalyst. Methods for supplying to the reaction system the composite oxide alone as an oxidation catalyst for cleaning exhaust gas include, for example, a method involving applying the composite oxide to a heat-resistant ceramic structure such as cordierite used as a conventional catalyst carrier, a method involving mixing the heat-resistant ceramic structure and the composite oxide, and a method involving forming the composite oxide per se into pellet.

The composite oxide may be also used in the form of a three-way component catalyst in combination with a group VIII element. In this instance, when producing the composite oxide as described above, for example, a group VIII element can be preliminarily added as a raw material to dope the group VIII element as a constituent element of the composite oxide in a crystal. Alternatively, a group VIII element may be also supported on the surface of the preliminarily produced composite oxide.

Examples and Comparative Examples of the present invention will be now presented.

### Example 1

In this Example, the acetate or nitrate of manganese was first added to the acetate or nitrate of scandium into a molar ratio of Sc:Mn = 1:1, to which urea was further added into a molar ratio of Sc : Mn : N₂H₄CO = 1: 1: 6, followed by grind mixing. Next, the resultant mixture was allowed to react at 250°C for 30 minutes, then at 300°C for 30 minutes, and further at 350°C for one hour. After the end of reaction, the resultant mixture was subsequently grind mixed, followed by calcining at 800°C for one hour to provide a composite oxide.

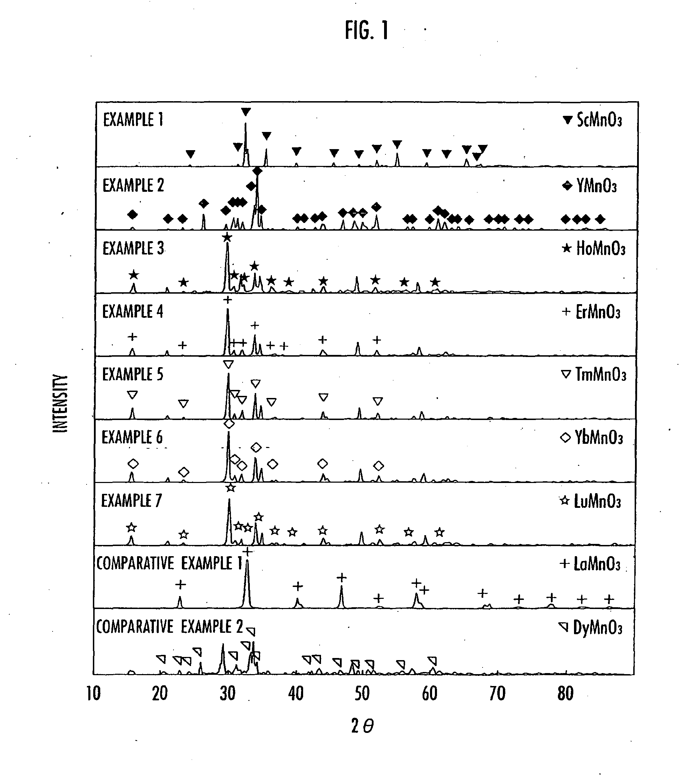

To ascertain the crystal structure of the composite oxide obtained in this Example, the X-ray diffraction pattern thereof was then measured. The measurement was carried out under conditions of tube voltage: 50 kV, tube current: 150 mA, diffractometer: 4°/minute, and measuring range (2θ): 10 to 90° using an X-ray diffractometer from Burker. As a result, it turned out that the crystal obtained in this Example was ScMnO₃ having a hexagonal structure. The ionic radius ratio between Sc and Mn (the ionic radius of Sc/the ionic radius of Mn) was 1.349. The X-ray diffraction pattern is shown in FIG. 1.

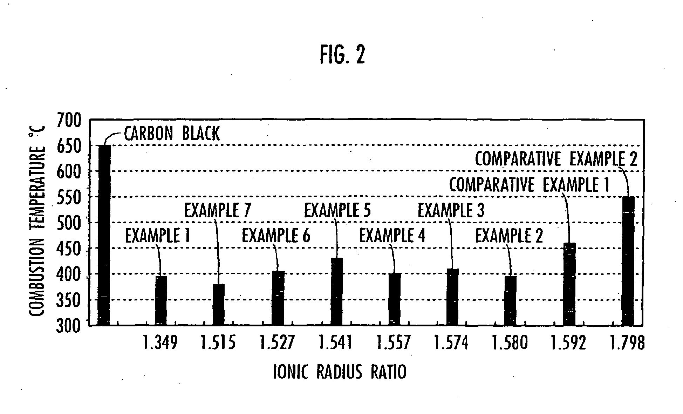

To evaluate the oxidation property of the composite oxide obtained in this Example for particulates, the composite oxide was then mixed with carbon black, followed by performing the thermal analysis of carbon black. The thermal analysis was carried out by using as a sample the mixture obtained by weighing the composite oxide acquired in this Example and carbon black so as to provide a weight ratio of composite oxide: carbon black = 20:1, which were then mixed employing an agate mortar for 5 minutes, and then the sample was heated up in the air from room temperature to 800°C at a speed of 10°C/minute on a thermal analysis instrument from Rigaku Corporation. The mixture of the composite oxide obtained in this Example and carbon black had a combustion peak temperature of 410°C. The result is shown in FIG. 2.

In addition, thermal analysis was separately carried out just as described above except for the use of only carbon black as a sample. As a result, the combustion peak temperature of carbon black alone was 650°C. The result is shown in FIG. 2.

### Example 2

In this Example, a composite oxide was first obtained just as described in Example 1 except for the use of the acetate or nitrate of yttrium instead of the acetate or nitrate of scandium.

To ascertain the crystal structure of the composite oxide obtained in this Example, the X-ray diffraction pattern thereof was then measured just as described in Example 1. As a result, it turned out that the crystal obtained in this Example was YMnO₃ having a hexagonal structure. The ionic radius ratio between Y and Mn (the ionic radius of Y/the ionic radius of Mn) was 1.580. The X-ray diffraction pattern is shown in FIG. 1.

To evaluate the oxidation property of the composite oxide obtained in this Example for particulates, the composite oxide was then mixed with carbon black, followed by performing the thermal analysis of carbon black just as described in Example 1. The mixture of the composite oxide obtained in this Example and carbon black had a combustion peak temperature of 390°C. The result is shown in FIG. 2.

### Example 3

In this Example, a composite oxide was first obtained just as described in Example 1 except for the use of the acetate or nitrate of holmium instead of the acetate or nitrate of scandium.

To ascertain the crystal structure of the composite oxide obtained in this Example, the X-ray diffraction pattern thereof was then measured just as described in Example 1. As a result, it turned out that the crystal obtained in this Example was HoMnO₃ having a hexagonal structure. The ionic radius ratio between Ho and Mn (the ionic radius of Ho/the ionic radius of Mn) was 1.574. The X-ray diffraction pattern is shown in FIG. 1.

To evaluate the oxidation property of the composite oxide obtained in this Example for particulates, the composite oxide was then mixed with carbon black, followed by performing the thermal analysis of carbon black just as described in Example 1. The mixture of the composite oxide obtained in this Example and carbon black had a combustion peak temperature of 430°C. The result is shown in FIG. 2.

### Example 4

In this Example, the acetate or nitrate of manganese was first added to the oxide of erbium into a molar ratio of Er:Mn = 1:1, to which urea was further added into a molar ratio of Er:Mn:N₂H₄CO = 1:1:6, followed by grind mixing using a ball mill for 5 hours. Next, the resultant mixture was allowed to react at 250°C for 30 minutes, then at 300°C for 30 minutes, and further at 350°C for one hour. After the end of reaction, the resultant mixture was subsequently grind mixed using a ball mill for 3 hours, followed by calcining at 800°C for one hour to provide a composite oxide.

To ascertain the crystal structure of the composite oxide obtained in this Example, the X-ray diffraction pattern thereof was then measured just as described in Example 1. As a result, it turned out that the crystal obtained in this Example was ErMnO₃ having a hexagonal structure. The ionic radius ratio between Er and Mn (the ionic radius of Er/the ionic radius of Mn) was 1.557. The X-ray diffraction pattern is shown in FIG. 1.

To evaluate the oxidation property of the composite oxide obtained in this Example for particulates, the composite oxide was then mixed with carbon black, followed by performing the thermal analysis of carbon black just as described in Example 1. The mixture of the composite oxide obtained in this Example and carbon black had a combustion peak temperature of 400°C. The result is shown in FIG. 2.

### Example 5

In this Example, a composite oxide was first obtained just as described in Example 4 except for the use of the oxide of thulium instead of the oxide of erbium.

To ascertain the crystal structure of the composite oxide obtained in this Example, the X-ray diffraction pattern thereof was then measured just as described in Example 1. As a result, it turned out that the crystal obtained in this Example was TmMnO₃ having a hexagonal structure. The ionic radius ratio between Tm and Mn (the ionic radius of Tm/the ionic radius of Mn) was 1.541. The X-ray diffraction pattern is shown in FIG. 1.

To evaluate the oxidation property of the composite oxide obtained in this Example for particulates, the composite oxide was then mixed with carbon black, followed by performing the thermal analysis of carbon black just as described in Example 1. The mixture of the composite oxide obtained in this Example and carbon black had a combustion peak temperature of 430°C. The result is shown in FIG. 2.

### Example 6

In this Example, a composite oxide was first obtained just as described in Example 4 except for the use of the oxide of ytterbium instead of the oxide of erbium.

To ascertain the crystal structure of the composite oxide obtained in this Example, the X-ray dif fraction pattern thereof was then measured just as described in Example 1. As a result, it turned out that the crystal obtained in this Example was YbMnO₃ having a hexagonal structure. The ionic radius ratio between Yb and Mn (the ionic radius of Yb/the ionic radius of Mn) was 1.527. The X-ray diffraction pattern is shown in FIG. 1.

To evaluate the oxidation property of the composite oxide obtained in this Example for particulates, the composite oxide was then mixed with carbon black, followed by performing the thermal analysis of carbon black just as described in Example 1. The mixture of the composite oxide obtained in this Example and carbon black had a combustion peak temperature of 405°C. The result is shown in FIG. 2.

### Example 7

In this Example, a composite oxide was first obtained just as described in Example 4 except for the use of the oxide of lutetium instead of the oxide of erbium.

To ascertain the crystal structure of the composite oxide obtained in this Example, the X-ray diffraction pattern thereof was then measured just as described in Example 1. As a result, it turned out that the crystal obtained in this Example was LuMnO₃ having a hexagonal structure. The ionic radius ratio between Lu and Mn (the ionic radius of Lu/the ionic radius of Mn) was 1.516. The X-ray diffraction pattern is shown in FIG. 1.

To evaluate the oxidation property of the composite oxide obtained in this Example for particulates, the composite oxide was then mixed with carbon black, followed by performing the thermal analysis of carbon black just as described in Example 1. The mixture of the composite oxide obtained in this Example and carbon black had a combustion peak temperature of 380°C. The result is shown in FIG. 2.

### Comparative Example 1

In this Comparative Example, a composite oxide was first obtained just as described in Example 1 except for the use of the acetate or nitrate of lanthanum instead of the acetate or nitrate of scandium.

To ascertain the crystal structure of the composite oxide obtained in this Comparative Example, the X-ray diffraction pattern thereof was then measured just as described in Example 1. As a result, it turned out that the crystal obtained in this Comparative Example was LaMnO₃ having an orthorhombic structure. The ionic radius ratio between La and Mn (the ionic radius of La/the ionic radius of Mn) was 1.592. The X-ray diffraction pattern is shown in FIG. 1.

To evaluate the oxidation property of the composite oxide obtained in this Comparative Example for particulates, the composite oxide was then mixed with carbon black, followed by performing the thermal analysis of carbon black just as described in Example 1. The mixture of the composite oxide obtained in this Comparative Example and carbon black had a combustion peak temperature of 450°C. The result is shown in FIG. 2.

### Comparative Example 2

In this Comparative Example, a composite oxide was first obtained just as described in Example 4 except for the use of the oxide of dysprosium instead of the oxide of erbium.

To ascertain the crystal structure of the composite oxide obtained in this Comparative Example, the X-ray diffraction pattern thereof was then measured just as described in Example 1. As a result, it turned out that the crystal obtained in this Comparative Example was DyMnO₃ having an orthorhombic structure. The ionic radius ratio between Dy and Mn (the ionic radius of Dy/the ionic radius of Mn) was 1.798. The X-ray diffraction pattern is shown in FIG. 1.

To evaluate the oxidation property of the composite oxide obtained in this Comparative Example for particulates, the composite oxide was then mixed with carbon black, followed by performing the thermal analysis of carbon black just as described in Example 1. The mixture of the composite oxide obtained in this Comparative Example and carbon black had a combustion peak temperature of 550°C. The result is shown in FIG. 2.

It is apparent from FIG. 2 that the composite oxides of Examples 1 to 7 each containing two kinds of metal elements, A and B, wherein, when the metal element A is one kind of metal element selected from the group consisting of Sc, Y, Ho, Er, Tm, Yb, and Lu, and the metal element B is Mn, the value of the ionic radius ratio (the ionic radius of metal element A)/(the ionic radius of metal element B) is in the range of from 1.349 to 1.580, can decrease the combustion peak temperature of carbon black compared to the composite compound of Comparative Example 1 (LaMnO₃) and the composite compound of Comparative Example 2 (DyMnO₃) each having an ionic radius exceeding the above range, and have an excellent oxidation property.

Thus, the composite oxides of Examples 1 to 7 can form oxidation catalysts for cleaning exhaust gas, excellent in the function of oxidizing high boiling point materials such as particulates and polycyclic aromatic hydrocarbons.

## Claims

1. Use of a composite oxide containing two kinds of metal elements and, when the two kinds of metal elements are defined as A and B, represented by the general formula of ABO₃, for an oxidation catalyst for cleaning exhaust gas,
wherein the value of (the ionic radius of metal element A) / (the ionic radius of metal element B) is in the range of from 1.349 to 1.580.

2. The use according to claim 1, wherein said metal element A is selected from the group consisting of Sc, Y, Ho, Er, Tm, Yb, and Lu, and said metal element B is Mn.

3. The use according to claim 1, wherein said composite oxide has a hexagonal structure.

## Patentansprüche

1. Verwendung eines Kompositoxids, das zwei Arten von Metallelementen enthält und, wenn die beiden Arten von Metallelementen als A und B definiert sind, durch die allgemeine Formel ABO₃ dargestellt wird, für einen Oxidationskatalysator zum Reinigen von Abgas,
wobei der Wert (Ionenradius von Metallelement A) / (Ionenradius von Metallelement B) im Bereich von 1,349 bis 1,580 ist.

2. Verwendung nach Anspruch 1, wobei das Metallelement A aus der Gruppe bestehend aus Sc, Y, Ho, Er, Tm, Yb, und Lu ausgewählt ist und das Metallelement B Mn ist.

3. Verwendung nach Anspruch 1, wobei das Kompositoxid eine hexagonale Struktur hat.

## Revendications

1. Utilisation d'un oxyde composite contenant deux sortes d'éléments métalliques et, lorsque les deux sortes d'éléments métalliques sont définies comme A et B, représenté par la formule générale ABO₃, pour un catalyseur d'oxydation pour épurer un gaz d'échappement,
dans laquelle la valeur du (rayon ionique de l'élément métallique A)/(rayon ionique de l'élément métallique B) est dans la gamme de 1,349 à 1,580.

2. Utilisation selon la revendication 1, dans laquelle ledit élément métallique A est choisi dans le groupe constitué par Sc, Y, Ho, Er, Tm, Yb et Lu, et ledit élément métallique B est Mn.

3. Utilisation selon la revendication 1, dans laquelle ledit oxyde composite a une structure hexagonale.
